# EUROPÄISCHE PATENTANMELDUNG

(11) **EP 4 105 870 A1**
(43) Veröffentlichungstag der Anmeldung: **21.12.2022**
(21) Anmeldenummer: 22179814.3
(22) Anmeldetag: 20.06.2022
(51) Int. Cl.: G06Q 30/02

(54) **VERFAHREN UND SYSTEM ZUM SAMMELN VON BONUSPUNKTEN**

(30) Priorität: 18.06.2021 DE 102021115888
(71) Anmelder: Loyal Systems Innovation GmbH, 22335 Hamburg (DE)
(72) Erfinder: Aßmann, Maximilian, 22339 Hamburg (DE)
(74) Vertreter: Hauck Patentanwaltspartnerschaft mbB

(57) **Zusammenfassung**

Verfahren zum Sammeln von Bonuspunkten mit den folgenden Schritten:
a) Auslesen von Daten aus einem passiven NFC-Chip mit einem NFC-fähigen Smartphone eines Benutzers, wobei der NFC-Chip einem Anbieter-Unternehmen zugeordnet ist und die ausgelesenen Daten eine eindeutige Kennung des NFC-Chips und Angaben zu dem Anbieter-Unternehmen umfassen,
b) Übermitteln einer Bonusanfrage, die die ausgelesenen Daten enthält, von dem Smartphone an einen Backend-Server,
c) Überprüfen, ob die eindeutige Kennung registriert und dem Anbieter-Unternehmen zugeordnet ist, durch den Backend-Server,
d) Gutschreiben von Bonuspunkten für den Benutzer, falls das Überprüfen ergeben hat, dass die eindeutige Kennung registriert und dem Anbieter-Unternehmen zugeordnet ist.

## Beschreibung

Die Erfindung betrifft ein Verfahren und ein System zum Sammeln von Bonuspunkten. Bonuspunkte, auch bezeichnet als Treue- oder Sammelpunkte, sind ein geläufiges Mittel zur Kundenbindung. Ein Benutzer erhält zum Beispiel für jeden Einkauf oberhalb eines Mindestumsatzes einen Bonuspunkt oder eine umsatzabhängige Anzahl von Bonuspunkten. Bei Erreichen einer bestimmten Anzahl von Bonuspunkten erhält der Benutzer bei seinem nächsten Einkauf eine Vergünstigung, z.B. ein Freigetränk oder einen an der Anzahl der gesammelten Bonuspunkte bemessenen Preisnachlass.

Eine technisch einfache Ausführung eines solchen Verfahrens ist mit Stempelkarten möglich. Der Benutzer muss die Stempelkarte bei jedem Einkauf vorzeigen und erhält als Bonuspunkt einen Stempel, bis die Stempelkarte voll ist und eine Vergünstigung erfolgt. Eine technische Lösung mit vergleichbarem Ablauf verwendet anstelle der Stempelkarten Kundenkarten aus Plastik. Der Benutzer muss die Kundenkarte bei jedem Einkauf vorzeigen und erhält eine Gutschrift in Form von Bonuspunkten auf ein Kundenkonto, das der Kundenkarte zugeordnet ist. Nachteilig an diesen Lösungen ist, dass der Benutzer für jedes Anbieter-Unternehmen eine spezielle Karte mitführen muss, was schnell als lästig empfunden wird.

Ebenfalls bekannt sind Verfahren, bei denen ein Benutzer mit seinem Smartphone während seines Einkaufs einen verkäuferseitig vorgehaltenen QR-Code einscannt, woraufhin seinem Kundenkonto Bonuspunkte gutgeschrieben werden. Derartige Verfahren bieten keinen hinreichenden Schutz vor missbräuchlicher Verwendung. Insbesondere können die QR-Codes einfach kopiert werden, etwa durch ein Foto oder eine einfache Fotokopie, die dann statt des Original-QR-Codes eingescannt werden können.

Davon ausgehend ist es die Aufgabe der Erfindung, ein Verfahren und ein System zum Sammeln von Bonuspunkten zur Verfügung zu stellen, die benutzerfreundlicher und vor Missbrauch besser geschützt sind.

Diese Aufgabe wird gelöst durch das Verfahren mit den Merkmalen des Anspruchs 1. Das Verfahren dient zum Sammeln von Bonuspunkten und weist die folgenden Schritte auf:
a) Auslesen von Daten aus einem passiven NFC-Chip mit einem NFC-fähigen Smartphone eines Benutzers, wobei der NFC-Chip einem Anbieter-Unternehmen zugeordnet ist und die ausgelesenen Daten eine eindeutige Kennung des NFC-Chips und Angaben zu dem Anbieter-Unternehmen umfassen,
b) Übermitteln einer Bonusanfrage, die die ausgelesenen Daten enthält, von dem Smartphone an einen Backend-Server,
c) Überprüfen, ob die eindeutige Kennung registriert und dem Anbieter-Unternehmen zugeordnet ist, durch den Backend-Server,
d) Gutschreiben von Bonuspunkten für den Benutzer, falls das Überprüfen ergeben hat, dass die eindeutige Kennung registriert und dem Anbieter-Unternehmen zugeordnet ist.

NFC steht für *near field communication* und ist ein verbreitetes, standardisiertes Verfahren zum Datenaustausch über kurze Entfernungen über eine Funkverbindung. Ein passiver NFC-Chip ist ein für diese Art der Kommunikation eingesetztes Bauteil, dass einen Datenspeicher und eine Antenne, jedoch keine eigene Energieversorgung aufweist. Die für das Aussenden der in dem Datenspeicher gespeicherten Daten erforderliche Energie nimmt der NFC-Chip durch elektromagnetische Induktion über eine Antenne aus dem Funksignal insbesondere des auslesenden Geräts auf. Die eindeutige Kennung des NFC-Chips kann zum Beispiel aus einem 7 Byte umfassenden Binärcode bestehen. Sie kann bereits auf Seiten des Herstellers der NFC-Chips vergeben und in dem NFC-Chip gespeichert werden. Anschließend kann die eindeutige Kennung nur gelesen, jedoch nicht geschrieben oder verändert werden.

Das Anbieter-Unternehmen ist ein Unternehmen, von dem der Benutzer Waren oder Dienstleistungen bezieht und dass den Benutzer durch das Ausgeben von Bonuspunkten an sich binden möchte. Es kann sich beispielsweise um ein Cafe oder ein Fitness-Center handeln. Die Angaben zu dem Anbieter-Unternehmen umfassen mindestens Daten, die eine Identifizierung eines Partner-Unternehmens ermögliche, insbesondere eine Unternehmenskennung, z.B. eine Verkäufer-ID. Zusätzlich können Vorgaben über die Vergabe von Bonuspunkten enthalten sein, z.B. dass jeder Kunde bei einem Einkauf eine bestimmte Anzahl von Bonuspunkten erhält.

Die Bonusanfrage erfolgt typischerweise als API-request, insbesondere gesteuert von einem Anwendungsprogramm auf dem Smartphone. Sie wird über ein Datennetzwerk an den Backend-Server übermittelt, in der Regel über das Internet und/oder ein Mobilfunknetz. Die Bonusanfrage enthält die genannten, aus dem NFC-Chip ausgelesenen Daten, so dass diese auf Seiten des Backend-Servers überprüft werden können. Hierzu ist es nicht erforderlich und unter Umständen auch nicht sinnvoll, die Daten in derselben Form zu übermitteln, in der sie auf dem NFC-Chip gespeichert sind. Vielmehr ist eine Decodierung der Daten durch das Smartphone ebenso möglich wie z.B. eine Verschlüsselung. Für die Überprüfung auf dem Backend-Server kommt es lediglich darauf an, dass die in den Daten enthaltenen Informationen ausgewertet werden können.

Der Backend-Server überprüft, ob die mit der Bonusanfrage übermittelte eindeutige Kennung des NFC-Chips registriert und einem Anbieter-Unternehmen zugeordnet ist. Hierzu kann der Backend-Server auf eine entsprechende Datenbank zugreifen, in der alle teilnehmenden Anbieter-Unternehmen verzeichnet sind.

Die Schritte a) und b) werden insbesondere von einem auf dem Smartphone laufenden Anwenderprogramm ausgeführt, Schritt c) von dem Backend-Server. Schritt d), das Gutschreiben der Bonuspunkte, kann ebenfalls von dem Backend-Server erledigt werden, insbesondere durch einen entsprechenden Eintrag auf einem dem Benutzer zugeordneten Kundenkonto in einer Datenbank, auf die der Backend-Server zugreift. Dabei kann es sich um dieselbe Datenbank handeln, in der die Anbieter-Unternehmen und zugeordneten eindeutigen Kennungen verwaltet werden.

Durch die Erfindung kann vor der Gutschrift von Bonuspunkten verifiziert werden, ob die Bonusanfrage von einem registrierten Anbieter-Unternehmen unter Verwendung des zugeordneten NFC-Chips stammt. Das Verfahren ist für den Benutzer sehr einfach, weil das Versenden der Bonusanfrage sowie die Überprüfung und Gutschrift der Bonuspunkte vollautomatisch abläuft. Gleichzeitig ist ein Missbrauch wesentlich erschwert, weil der NFC-Chip nicht kopiert werden kann. Selbst ein Auslesen der Angaben zu dem Anbieter-Unternehmen und der eindeutigen Kennung kann nicht dazu verwendet werden, diese Daten auf einen anderen NFC-Chip zu übertragen, weil dessen eindeutige Kennung nicht durch die registrierte Kennung ersetzt werden kann.

In einer Ausgestaltung ist der passive NFC-Chip am Standort des Anbieter-Unternehmens fest installiert oder in einen handhabbaren Gegenstand integriert ist, der von einer Kontaktperson des Anbieter-Unternehmens verwahrt wird, insbesondere in eine Scheckkarte. Dadurch kann der NFC-Chip nicht ohne weiteres und/oder nicht unbemerkt für eine missbräuchliche Verwendung entwendet werden.

In einer Ausgestaltung übermittelt der Backend-Server in einem weiteren Schritt eine Antwort auf die Bonusanfrage an das Smartphone und der Benutzer wird über die gutgeschriebenen Bonuspunkte informiert. Diese Information kann insbesondere von dem Anwenderprogramm auf dem Smartphone angezeigt werden. Es ist jedoch auch eine Information zum Beispiel per E-Mail oder SMS möglich. In jedem Fall profitiert der Benutzer von einer schnellen Rückmeldung, was die angestrebte Kundenbindung fördert.

In einer Ausgestaltung enthält die Bonusanfrage zusätzlich zu den ausgelesenen Daten eine eindeutige Kennung des Smartphones, wobei der Backend-Server überprüft, ob diese Kennung einem registrierten Benutzer zugeordnet ist. Somit kann auf Seiten des Backend-Servers ein Überblick über die Benutzer gewahrt und es können Benutzerprofile erstellt werden.

In einer Ausgestaltung werden, falls die eindeutige Kennung des Smartphones einem registrierten Benutzer zugeordnet ist, diesem Benutzer im Schritt d) die Bonuspunkte gutgeschrieben. Anhand der eindeutigen Kennung des Smartphones ist somit eine besonders einfache Benutzerverwaltung möglich.

In einer Ausgestaltung wird, falls die eindeutige Kennung des Smartphones keinem registrierten Benutzer zugeordnet ist, ein neuer Benutzer registriert und dieser Kennung zugeordnet. Dieses Vorgehen ist für den Benutzer besonders einfach. Insbesondere ist es für nicht erforderlich, selbst ein Benutzerkonto anzulegen.

In einer Ausgestaltung werden dem neuen Benutzer im Schritt d) auch dann Bonuspunkte gutgeschrieben, wenn das Überprüfen im Schritt c) ergeben hat, dass die eindeutige Kennung nicht registriert oder nicht dem Anbieter-Unternehmen zugeordnet ist. Dadurch wird sichergestellt, dass jeder Benutzer bei der ersten Verwendung des Verfahrens mit Bonuspunkten (natürlich gegebenenfalls auch mit nur einem Bonuspunkt) bedacht wird.

In einer Ausgestaltung wird im Schritt c) zusätzlich überprüft, ob dem Benutzer in einem vorgegebenen, zurückliegenden Zeitraum mehr als eine vorgegebene Anzahl von Bonuspunkten gutschrieben worden ist, wobei in diesem Fall ein weiterer Kontrollschritt ausgeführt wird, der insbesondere die Eingabe eines Codes umfasst, beispielsweise durch einen Vertreter des Anbieter-Unternehmens. Der Code kann insbesondere eine PIN oder ein Passwort sein. Im einfachsten Fall wird der Code von einem Vertreter des Anbieter-Unternehmens in das Smartphone des Benutzers eingegeben. Durch diesen oder einen ähnlichen Kontrollschritt wird verhindert, dass ein Benutzer durch wiederholtes Auslesen der Daten aus dem NFC-Chips in kurzer Folge mehr Bonuspunkte erhält als Vorgesehen.

In einer Ausgestaltung werden in einem dem Schritt a) vorausgehenden Schritt von dem Smartphone Daten von dem passiven NFC-Chip ausgelesen, die Angaben zu dem Anbieter-Unternehmen, jedoch nicht die eindeutige Kennung des NFC-Chips umfassen, woraufhin von dem Smartphone eine unvollständige Bonusanfrage an den Backend-Server übermittelt wird, die die eindeutige Kennung des NFC-Chips nicht enthält, und anschließend wird eine Antwort auf die unvollständige Bonusanfrage an das Smartphone übermittelt und der Benutzer wird zum erneuten Auslesen der Daten von dem NFC-Chip aufgefordert. Dadurch wird ein Problem überwunden, dass auftreten kann, wenn beim Auslesen des NFC-Chips dessen eindeutige Kennung nicht von dem Smartphone abgefragt wird. In der Praxis geschieht dies, wenn das Auslesen des NFC-Chips nicht von dem auf dem Smartphone laufenden Anwenderprogramm gesteuert wird, sondern von einem im Hintergrund laufenden Betriebssystem des Smartphones. Tritt dieser Fall ein, liegen dem Anwenderprogramm die für eine vollständige Bonusanfrage benötigten Daten nicht vor. Stattdessen übermittelt das Anwenderprogramm eine unvollständige Bonusanfrage. Durch die Antwort vom Backend-Server mit der Aufforderung, die Daten erneut auszulesen, kann dieses Problem gelöst werden. Ein besonderer Vorteil besteht in der zusätzlichen Möglichkeit, auf die unvollständige Bonusanfrage dann mit einer Gutschrift von Bonuspunkten zu reagieren (statt mit der Aufforderung, die Daten erneut auszulesen), wenn die unvollständige Bonusanfrage von einem neuen, noch nicht registrierten Benutzer stammt.

Die oben angegebene Aufgabe wird ebenfalls gelöst durch das System mit den Merkmalen des Anspruchs 10. Das System dient zum Sammeln von Bonuspunkten und weist die folgenden Merkmale auf:
- einen passiven NFC-Chip, der einem Anbieter-Unternehmen zugeordnet ist, eine eindeutige Kennung aufweist und auf dem Angaben zu dem Anbieter-Unternehmen gespeichert sind,
- ein NFC-fähiges Smartphone, und
- einen Backend-Server,
- wobei das Smartphone dazu eingerichtet ist, Daten aus dem NFC-Chip einschließlich der eindeutigen Kennung und der Angaben zu dem Anbieter-Unternehmen auszulesen, sowie dazu, eine Bonusanfrage, die die ausgelesenen Daten enthält, an den Backend-Server zu übermitteln,
- wobei der Backend-Server dazu eingerichtet ist, zu überprüfen, ob die eindeutige Kennung registriert und dem Anbieter-Unternehmen zugeordnet ist, sowie dazu, einem Benutzer Bonuspunkte gutzuschreiben, falls das Überprüfen ergeben hat, dass die eindeutige Kennung registriert und dem Anbieter-Unternehmen zugeordnet ist.

Das System dient insbesondere zum Ausführen eines Verfahrens nach einem der Ansprüche 1 bis 9. Die Erläuterungen der Merkmale und Vorteile des Verfahrens gelten entsprechend. Weitere Ausgestaltungen des Systems sind nachfolgend in durchnummerierten Absätzen angegeben, auf die anhand der jeweiligen Nummern Bezug genommen wird:
11. System nach Anspruch 10, dadurch gekennzeichnet, dass der passive NFC-Chip am Standort des Anbieter-Unternehmens fest installiert oder in einen handhabbaren Gegenstand integriert ist, der von einer Kontaktperson des Anbieter-Unternehmens verwahrt wird, insbesondere in eine Scheckkarte.
12. System nach Anspruch 10 oder Nr. 11, dadurch gekennzeichnet, dass der Backend-Server dazu eingerichtet ist, eine Antwort auf die Bonusanfrage an das Smartphone zu übermitteln, um den Benutzer über die gutgeschriebenen Bonuspunkte zu informieren.
13. System nach Anspruch 10 oder Nr. 11 oder 12, dadurch gekennzeichnet, dass die Bonusanfrage zusätzlich zu den ausgelesenen Daten eine eindeutige Kennung des Smartphones enthält, wobei der Backend-Server dazu eingerichtet ist, zu überprüfen, ob diese Kennung einem registrierten Benutzer zugeordnet ist.
14. System nach Nr. 13, dadurch gekennzeichnet, dass, falls die eindeutige Kennung des Smartphones einem registrierten Benutzer zugeordnet ist, diesem Benutzer die Bonuspunkte gutgeschrieben werden.
15. System nach Nr. 13 oder 14, dadurch gekennzeichnet, dass der Backend-Server dazu eingerichtet ist, falls die eindeutige Kennung des Smartphones keinem registrierten Benutzer zugeordnet ist, einen neuen Benutzer zu registrieren und dieser Kennung zuzuordnen.
16. System nach Nr. 15, dadurch gekennzeichnet, dass dem neuen Benutzer auch dann Bonuspunkte gutgeschrieben werden, wenn das Überprüfen ergeben hat, dass die eindeutige Kennung nicht registriert oder nicht dem Anbieter-Unternehmen zugeordnet ist.
17. System nach Anspruch 10 oder einer der Nr. 11 bis 16, dadurch gekennzeichnet, dass der Backend-Server dazu eingerichtet ist, zusätzlich zu überprüfen, ob dem Benutzer in einem vorgegebenen, zurückliegenden Zeitraum mehr als eine vorgegebene Anzahl von Bonuspunkten gutschrieben worden ist, und in diesem Fall einen weiteren Kontrollschritt zu veranlassen, der insbesondere die Eingabe eines Codes umfasst, beispielsweise durch einen Vertreter des Anbieter-Unternehmens.
18. System nach Anspruch 10 oder einer der Nr. 11 bis 17, dadurch gekennzeichnet, dass das System dazu eingerichtet ist, in einem dem Auslesen der Daten aus dem NFC-Chip vorausgehenden Schritt mit dem Smartphone Daten von dem NFC-Chip auszulesen, die Angaben zu dem Anbieter-Unternehmen, jedoch nicht die eindeutige Kennung des NFC-Chips umfassen, woraufhin von dem Smartphone eine unvollständige Bonusanfrage an den Backend-Server übermittelt wird, die die eindeutige Kennung des NFC-Chips nicht enthält, und dass anschließend eine Antwort auf die unvollständige Bonusanfrage an das Smartphone übermittelt und der Benutzer zum erneuten Auslesen der Daten von dem NFC-Chip aufgefordert wird.

Nachfolgend wird die Erfindung anhand von Abbildungen näher erläutert. Es zeigen:
- Fig. 1: ein Diagramm zu den Elementen des Systems mit Erläuterungen zu den Verfahrensschritten;
- Fig. 2: ein Flussdiagramm zur Veranschaulichung einiger Schritte des Verfahrens;
- Fig. 3: eine Bildschirmdarstellung auf dem Smartphone, die während des Verfahrens angezeigt werden kann;
- Fig. 4: eine weitere Bildschirmdarstellung auf dem Smartphone, die während des Verfahrens angezeigt werden kann.

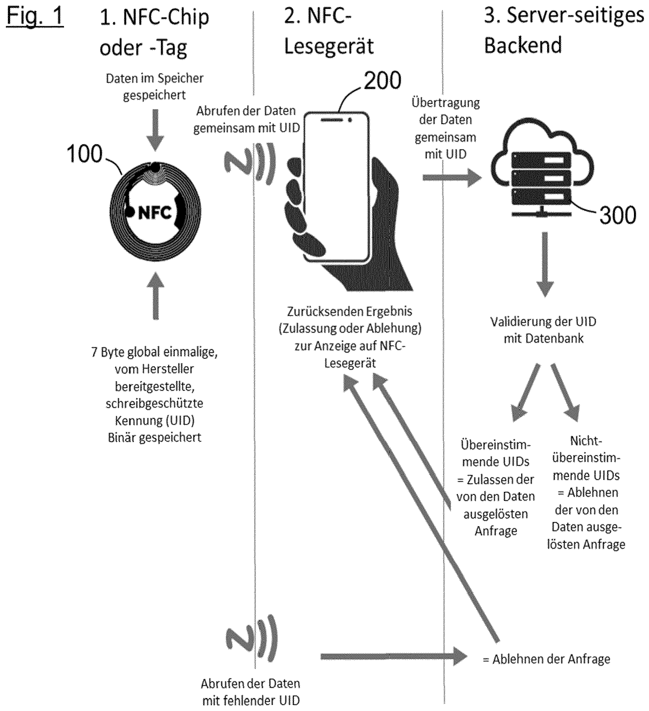

Fig. 1 zeigt ein System zum Sammeln von Bonuspunkten. Es umfasst einen NFC-Chip 100, ein Smartphone 200 und einen Backend-Server 300. Der NFC-Chip 100 ist am Standort eines Anbieter-Unternehmens fest installiert, zum Beispiel im Tresen eines Cafes. Der Backend-Server 300 kann an einem beliebigen Standort stehen, solange eine Datenkommunikation mit dem Smartphone 200 möglich ist, insbesondere über das Internet.

Zur Ausführung des Verfahrens liest ein Benutzer mit seinem Smartphone 200 Daten von dem NFC-Chip 100 aus, umfassend Angaben zu dem Anbieter-Unternehmen und eine eindeutige Kennung des NFC-Chips. Diese wird nachfolgend auch als UID bezeichnet.

Im nächsten Schritt erstellt das Smartphone 200, genauer ein darauf laufendes Anwenderprogramm, eine Bonusanfrage, die als API-request an den Backend-Server 300 übermittelt wird und die die ausgelesenen Daten umfasst.

Anschließend überprüft der Backend-Server 300, ob die übermittelte eindeutige Kennung registriert und dem Anbieter-Unternehmen zu geordnet ist. Ergibt diese Validierung, dass dies der Fall ist, werden dem Benutzer Bonuspunkte (in der gewünschten Anzahl, gegebenenfalls auch nur ein einziger Bonuspunkt) gutgeschrieben. Anderenfalls wird die Bonusanfrage abgelehnt und es werden keine Bonuspunkte gutgeschrieben.

Im unteren Teil der Fig. 1 ist ein Sonderfall dargestellt, bei dem zunächst unvollständige Daten aus dem NFC-Chip 100 ausgelesen wurden, insbesondere im Hintergrund von einem Betriebssystem des Smartphones 200. Dies führt ebenfalls zu einer Zurückweisung der Bonusanfrage, zusätzlich übermittelt der Backend-Server eine Antwort auf die unvollständige Bonusanfrage an das Smartphone, mit der der Benutzer zum erneuten Auslesen der Daten von dem NFC-Chip aufgefordert wird.

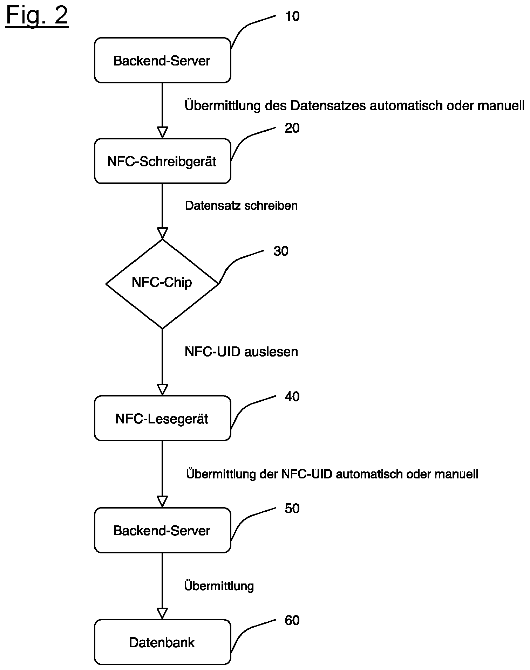

Der in Fig. 2 dargestellt Ablauf enthält als dem beschriebenen Verfahren vorausgehende Schritte eine Übermittlung eines Datensatzes von einem Backend-Server 10 an ein NFC-Schreibgerät 20, bei dem es sich ebenfalls um ein Smartphone 200 handeln kann. Dieser Datensatz wird im nächsten Schritt auf den NFC-Chip 30 geschrieben. Auf diese Weise können zum Beispiel die Angaben über das Anbieter-Unternehmen auf den NFC-Chip 30 gelangen.

Anschließend wird die NFC-UID mit dem NFC-Lesegerät 40 ausgelesen und an den Backend-Server 50 übermittelt und von diesem in einer Datenbank 60 gespeichert. Dort wird die UID dem Anbieter-Unternehmen zugeordnet, so dass das beanspruchte Verfahren ausgeführt werden kann.

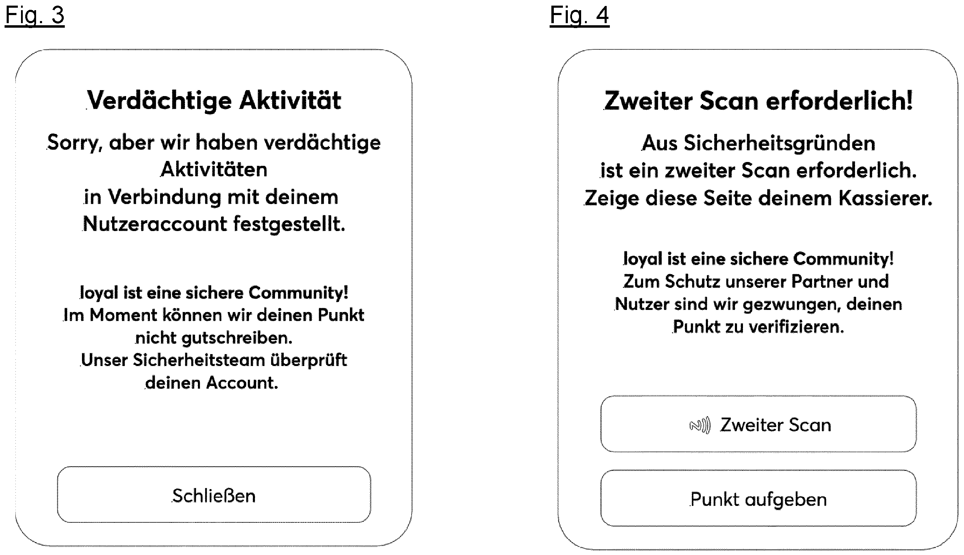

Fig. 3 zeigt eine Bildschirmanzeige auf dem Smartphone, die angezeigt werden kann, wenn eine Bonusanfrage vom Backend-Server zurückgewiesen wurde.

Fig. 4 zeigt eine Bildschirmanzeige auf dem Smartphone, die angezeigt werden kann, wenn eine unvollständige Bonusanfrage an den Backend-Server übermittelt und von diesem beantwortet wurde. Der Benutzer wird zum erneuten Auslesen der Daten aufgefordert.

Nachfolgend werden weitere Aspekte der Erfindung nochmals ausführlicher erläutert, wobei teils abweichende Begriffe verwendet werden und die Einzelheiten lediglich beispielhaft sind.

Es handelt sich um ein technologisches Verfahren, welches API-Anfragen mit einem Near-Field-Communication-Chip-Identifikator (=UID) verknüpft, um NFC-Technologie zum sicheren und authentifizierten Sammeln von Bonuspunkten oder zum sicheren und authentifizierten Einlösen von Bonuspunkten einzusetzen. Es werden Daten von einem NFC-Chip zusammen mit seiner UID von einem NFC-Lesegerät abgerufen; anschließend findet eine Decodierung dieser Daten und ein anschließendes Übertragen der decodierten Daten zusammen mit der abgerufenen UID an einen Backend-Server statt, welcher die übertragene UID mit einer UID-Datenbank abgleicht, um sodann zu entscheiden, ob die API-Anfrage (Sammeln oder Einlösen von Bonuspunkten) zugelassen oder abgelehnt wird, je nachdem, ob die abgerufene UID mit der Backend-UID-Datenbank übereinstimmt oder nicht. Bei jeder API-Anfrage wird des Weiteren die Geräte-ID des NFC-Lesegeräts übertragen. Diese Methode setzt voraus, dass vor der API-Anfrage eine UID-Datenbank erstellt wurde, die alle möglichen Identifikatoren (UIDs) auflistet, die zu einer Zulassung der API-Anfrage führen können.

NFC-Technologie ist eine Unterform der RFID-Technik, die zunehmend an Popularität, Anwendungsbereichen und Marktpenetranz gewinnt. Sie ermöglicht mittels elektromagnetischer Induktion (im Radiofrequenz-Bereich) das kontaktlose Austauschen digitaler Informationen zwischen zwei Entitäten, vorausgesetzt, diese werden in unmittelbare räumliche Nähe zueinander gebracht.

Grundsätzlich kann zwischen verbindungslosem und verbindungsbehaftetem Informationsaustausch unterschieden werden. Bei ersterem besteht ein Austausch zwischen einem "passiven", nicht an eine Stromquelle angeschlossenen NFC-Chip und einem NFC-Lesegerät (typischerweise ein NFC-fähiges Smartphone); bei letzterem sind beide Entitäten mit einer Stromquelle ausgestattet.

Ein passiver NFC-Chip weist ein Speichermedium auf (den sogenannten "Integrated Circuit", kurz IC), das Verzeichnisse mit unterschiedlichen Zulassungen aufweist: neben reinen ,read-only' Verzeichnissen existieren Speicherareale, die 'writable' bzw. beschreibbar sind. Es wird bei jedem marktüblichen NFC-Chip eine vom Hersteller vergebene UID im ,read-only' Verzeichnis hinterlegt, die aufgrund ihrer Verzeichnislokalisation somit irreversibel-festgesetzt (unüberschreibbar) ist. Somit ist jeder NFC-Chip durch seine UID eindeutig identifizierbar. Im ,writable' Verzeichnis können mit einem NFC-Schreibgerät (typischerweise gleichermaßen ein NFC-fähiges Smartphone) Informationen bzw. Datensätze geschrieben werden. Es ist gleichermaßen eine Überschreibung der beschreibbaren Speicherareale des IC's möglich, vorausgesetzt, der NFC-Chip ist zeitlich zuvor nicht in einen absoluten "read-only" State versetzt worden.

Jedermann kennt die klassische Bonuskarte, auf der man nach einem Cafe oder Friseurbesuch einen Bonuspunkt, oder praktisch "Stempel" erhält. In Folge des Markttrends zu zunehmenden Stempelkarten aus Papier oder auch Plastik in der Tasche oder Geldbeutel eines jeden Konsumenten birgt NFC-Technologie die Chance des Paradigmenwechsels des Bonuspunktesammelns und -einlösens von analog zu digital. Denn ein Smartphone, von denen die neueren nahezu alle NFCfähig sind, hat heute jeder Konsument in der Tasche. NFC-Chips können beim Händler immobil aufgestellt werden und lösen somit den klassischen ,Stempel' ab. Die NFC-Technologie wird momentan hauptsächlich im Bereich des Micro-Payments verwendet.

Allerdings ist der verbindungslose Informationsaustausch mittels NFC-Technologie bislang unsicher. Jedes NFC-Lesegerät kann die auf dem NFC-Chip gespeicherten Datensätze auslesen; diese sind de-facto "öffentlich abrufbare" Informationen. Somit sind sie gleichermaßen speicherbar. Die NFC-Technologie ist bis dato nicht im Stande, ein sicheres Bonuspunktesammeln oder -einlösen zu gewährleisten. Denn jedes NFC-Lesegerät kann die Datensätze speichern und somit einen Befehl, Bonuspunkte zu sammeln oder einzulösen, unautorisiert replizieren. Gleichermaßen denkbar ist das Speichern des Datensatzes und das anschließende Beschreiben dieses Datensatzes auf einen weiteren NFC-Chip (der sogenannte Ansatz des Klonens). Auch das Klonen hat zur Folge, dass ein API-request unautorisiert repliziert werden kann.

Es wird ein Verfahren vorgestellt, welches das Punktsammeln oder -einlösen mittels verbindungslosem (passivem) NFC-Informationsaustausch fälschungs- und replikationssicher macht.

Fig. 3 zeigt ein Graphical User Interace (GUI) der App (zuvor auch bezeichnet als Anwenderprogramm), installiert auf dem Smartphone des Clients (zuvor auch bezeichnet als Benutzer), sollte eine übermittelte NFC-UID nicht in der dem Backend-Server zugänglichen Datenbank zugeordnet sein.

Fig. 4 zeigt ein Graphical User Interace (GUI) der App, installiert auf dem Smartphone des Clients, sollte eine NFC-UID nicht übermittelt worden sein, u.a. für den Fall, dass eine API-Anfrage über einen externen NFC-Lesebefehl kommt.

Fig. 2 betrifft Voraussetzungen, die für das Verfahren im Vorhinein getroffen werden müssen.

Das Verfahren prozessiert das digitale Sammeln und/oder Einlösen eines Bonuspunkts oder mehrerer Bonuspunkte mittels einer API-Anfrage, die von einem Client, in der Regel einer mobilen App, die auf einem NFC-fähigen Smartphone installiert ist, an einen Backend-Server gestellt wird.

Voraussetzung für diese API-Anfrage ist, dass der Client ein NFC-Lesegerät in sich trägt, und mittels NFC-Technologie mit einem verbindungslosen (passiven) NFC-Chip kommunizieren kann.

Ein API-Request soll in diesem Verfahren nur autorisiert vorgenommen werden können. In der Praxis heißt dies, dass der Client sich in den Räumlichkeiten und/oder am Verkaufsplatz der bonuspunkt-gebenden Person aufhält und zuvor einen qualifizierenden Einkauf (wie beispielweise eines Cafes oder Mittagstischs) getätigt hat. Die Szenarien können an dieser Stelle vielfältig sein, sodass das hier genannte Szenario lediglich eines von vielen möglichen Fallbeispielen darstellt und andere Szenarien, die einen Bonuspunkt rechtfertigen, explizit nicht ausgeschlossen werden.

Sobald der Client den qualifizierenden Einkauf getätigt hat (und ggfs. vom Verkäufer auf das Vorhandensein eines NFC-Chips 100 zum Punktsammeln aufmerksam gemacht worden ist), "taggt" der Client mit einem Lesebefehl seines Smartphones 200 diesen passiven NFC-Chip 100, wie in Fig. 1 ersichtlich. Es findet ein Datentransfer vom NFC-Chip 100 auf das Smartphone 200 des auf dem NFC-Chip gespeicherten Datensatzes statt, nebst der NFC-UID. Der Datensatz wird nunmehr auf dem Smartphone 200 (in der App) decodiert. Dieser Datensatz enthält Verkäuferinformation (vorstehend auch bezeichnet als Angaben über das Anbieter-Unternehmen), genauer eine Verkäufer-ID, sowie die verwendete Kommunikationstechnik (NFC) zwischen NFC-Chip 100 und Smartphone 200. Die App auf dem Smartphone 200 verschickt nun eine "POST /api/addPoints" Anfrage für das Hinzufügen eines Bonus- bzw. Stempelpunkts an den Backend-Server 300. Hierzu übermittelt sie neben Verkäufer-ID, verwendeter Kommunikationstechnik und NFC-UID auch die Geräte-ID des anfragenden Smartphones 200.

Der Backend-Server 300 prozessiert die Anfrage, indem geprüft wird, ob die übermittelte Verkäufer-ID existiert. Auch wird validiert, ob die übermittelte NFC-UID der Verkäufer-ID in der Datenbank zugeordnet ist. Sollten beide Validierungsschritte (die simultan oder kurz hintereinander stattfinden können) erfolgreich sein, wird geprüft, ob die übermittelnde Geräte-ID einen schon bestehenden Nutzer-Eintrag besitzt. Sollte dies nicht der Fall sein, wird ein neuer Eintrag erstellt; andernfalls wird einem bestehenden Eintrag dieser Geräte-ID ein Punkt hinzugefügt. Die hier beschriebenen Schritte finden simultan oder kurz hintereinander, in gleichgültiger Reihenfolge, statt.

Sollte die angefragte Verkäufer-ID nicht (mehr) existieren, lehnt der Backend-Server 300 die API-Anfrage ab. Gleichermaßen lehnt der Backend-Server 300 die API-Anfrage ab, sollte die übermittelte NFC-UID nicht mit der Verkäufer-ID in der Datenbank verknüpft sein. In diesem Fall sendet der Backend-Server einen Fehlercode an die App zurück, welcher in GUI wie in Fig. 3 abgebildet resultiert.

Im Rahmen des Punktesammelns mittels NFC-Technologie bieten moderne Smartphones heutzutage neben der in-App NFC-Kommunikation auch die externe Möglichkeit, direkt über das Betriebssystem des Smartphones einen NFC-Lesebefehl auszuführen und somit Datensätze von NFC-Chips auszulesen. Man spricht auch von sogenannter ,Background'-NFC. Sollte ein Client diesen Weg wählen (beispielweise, da die App ungeöffnet blieb), wird bei iOS sowie Androidbasierten Smartphones lediglich der Datensatz des NFC-Chips übermittelt, nicht aber dessen NFC-UID. In einem solchen Fall übermittelt das Smartphone 200 via der installierten App neben Verkäufer-ID, verwendeter Kommunikationstechnik, und Geräte-ID keine NFC-UID. In diesem Fall sendet der Backend-Server 300 einen Fehlercode an die App zurück, welcher in GUI wie in Fig. 4 abgebildet resultiert. Diese GUI regt den Client an, die API-Anfrage zu wiederholen, dieses Mal allerdings intern (in-App getriggert), sodass die NFC-UID in dieser Anfrage an den Backend-Server 300 mitgesandt wird.

Das hier beschriebene Verfahren toleriert allerdings ein Szenario einer nicht übermittelten (fehlenden) NFC-UID, sollte es sich bei der anfragenden Geräte-ID um eine erstmalige Anfrage zum Sammeln eines Bonuspunkts bei diesem Verkäufer handeln. Der Backend-Server 300 setzt in dem Fall, dass es sich um einen ersten Bonuspunkt dieser Geräte-ID in Bezug auf die Verkäufer-ID handelt, einen der beiden der vorher beschriebenen Validierungsschritte (nämlich die Überprüfung der eindeutigen Kennung) aus. Der Backend-Server 300 prüft lediglich, ob die Verkäufer-ID existiert und erstellt in diesem Fall einen Nutzer-Eintrag für die übermittelnde Geräte-ID. Diese Logik macht es neuen Clients einfach, einen ersten Punkt zu sammeln, selbst wenn sie dieses über einen wie oben beschriebenen externen NFC-Lesebefehl tun. In keinem Fall sendet der Backend-Server einen Fehlercode wie in Fign. 3 und 4 gezeigt an die App zurück.

Voraussetzung für oben beschriebenes Verfahren zum Punktesammeln kann das Programmieren des NFC-Chips mit dem vollständigen Datensatz mittels eines NFC-Schreibgeräts, typischerweise eines NFC-fähigen Smartphones, sein. Außerdem kann es von Nöten sein, aus dem ,read-only' Verzeichnis des NFC-Chips die NFC-UID auszulesen, um diese in der Datenbank, auf die der Backend-Server zugreift, einzutragen. Um die Funktionsfähigkeit des Systems zu gewährleisten, kann es von Vorteil sein, dass der Datensatz, welcher auf den NFC-Chip geschrieben wird, encodiert dieselbe Verkäufer-ID hat, welche auf die Datenbank gemappt wird. In Fig. 2 wird ein NFC-Chip 10 durch ein NFC-Schreibgerät 30 mit einem Datensatz beschrieben. Dieser Datensatz wurde zuvor vom Backend-Server 10 generiert und erhält die Parameter Verkäufer-ID sowie die verwendete Kommunikationstechnik (NFC).

Die NFC-UID wird anschließend durch ein NFC-Lesegerät 40 ausgelesen und an den Backend-Server 50 übermittelt, welcher diese anschließend in die Datenbank des Backend-Servers 60 hinterlegt.

## Patentansprüche

1. Verfahren zum Sammeln von Bonuspunkten mit den folgenden Schritten:
a) Auslesen von Daten aus einem passiven NFC-Chip (100) mit einem NFC-fähigen Smartphone (200) eines Benutzers, wobei der NFC-Chip (100) einem Anbieter-Unternehmen zugeordnet ist und die ausgelesenen Daten eine eindeutige Kennung des NFC-Chips (100) und Angaben zu dem Anbieter-Unternehmen umfassen,
b) Übermitteln einer Bonusanfrage, die die ausgelesenen Daten enthält, von dem Smartphone (200) an einen Backend-Server (300),
c) Überprüfen, ob die eindeutige Kennung registriert und dem Anbieter-Unternehmen zugeordnet ist, durch den Backend-Server (300),
d) Gutschreiben von Bonuspunkten für den Benutzer, falls das Überprüfen ergeben hat, dass die eindeutige Kennung registriert und dem Anbieter-Unternehmen zugeordnet ist.

2. Verfahren nach Anspruch 1, **dadurch gekennzeichnet, dass** der passive NFC-Chip (100) am Standort des Anbieter-Unternehmens fest installiert oder in einen handhabbaren Gegenstand integriert ist, der von einer Kontaktperson des Anbieter-Unternehmens verwahrt wird, insbesondere in eine Scheckkarte.

3. Verfahren nach Anspruch 1 oder 2, **dadurch gekennzeichnet, dass** in einem weiteren Schritt der Backend-Server (300) eine Antwort auf die Bonusanfrage an das Smartphone (200) übermittelt und der Benutzer über die gutgeschriebenen Bonuspunkte informiert wird.

4. Verfahren nach einem der Ansprüche 1 bis 3, **dadurch gekennzeichnet, dass** die Bonusanfrage zusätzlich zu den ausgelesenen Daten eine eindeutige Kennung des Smartphones (200) enthält, wobei der Backend-Server (300) überprüft, ob diese Kennung einem registrierten Benutzer zugeordnet ist.

5. Verfahren nach Anspruch 4, **dadurch gekennzeichnet, dass**, falls die eindeutige Kennung des Smartphones (200) einem registrierten Benutzer zugeordnet ist, diesem Benutzer im Schritt d) die Bonuspunkte gutgeschrieben werden.

6. Verfahren nach Anspruch 4 oder 5, **dadurch gekennzeichnet, dass**, falls die eindeutige Kennung des Smartphones (200) keinem registrierten Benutzer zugeordnet ist, ein neuer Benutzer registriert und dieser Kennung zugeordnet wird.

7. Verfahren nach Anspruch 6, **dadurch gekennzeichnet, dass** dem neuen Benutzer im Schritt d) auch dann Bonuspunkte gutgeschrieben werden, wenn das Überprüfen im Schritt c) ergeben hat, dass die eindeutige Kennung nicht registriert oder nicht dem Anbieter-Unternehmen zugeordnet ist.

8. Verfahren nach einem der Ansprüche 1 bis 7, **dadurch gekennzeichnet, dass** im Schritt c) zusätzlich überprüft wird, ob dem Benutzer in einem vorgegebenen, zurückliegenden Zeitraum mehr als eine vorgegebene Anzahl von Bonuspunkten gutschrieben worden ist, wobei in diesem Fall ein weiterer Kontrollschritt ausgeführt wird, der insbesondere die Eingabe eines Codes umfasst, beispielsweise durch einen Vertreter des Anbieter-Unternehmens.

9. Verfahren nach einem der Ansprüche 1 bis 8, **dadurch gekennzeichnet, dass** in einem dem Schritt a) vorausgehenden Schritt von dem Smartphone (200) Daten von dem passiven NFC-Chip (100) ausgelesen werden, die Angaben zu dem Anbieter-Unternehmen, jedoch nicht die eindeutige Kennung des NFC-Chips (100) umfassen, woraufhin von dem Smartphone (200) eine unvollständige Bonusanfrage an den Backend-Server (300) übermittelt wird, die die eindeutige Kennung des NFC-Chips (100) nicht enthält, und dass anschließend eine Antwort auf die unvollständige Bonusanfrage an das Smartphone (200) übermittelt und der Benutzer zum erneuten Auslesen der Daten von dem NFC-Chip (100) aufgefordert wird.

10. System zum Sammeln von Bonuspunkten, wobei das System die folgenden Merkmale aufweist:
• einen passiven NFC-Chip (100), der einem Anbieter-Unternehmen zugeordnet ist, eine eindeutige Kennung aufweist und auf dem Angaben zu dem Anbieter-Unternehmen gespeichert sind,
• ein NFC-fähiges Smartphone (200), und
• einen Backend-Server (300),
• wobei das Smartphone (200) dazu eingerichtet ist, Daten aus dem NFC-Chip (100) einschließlich der eindeutigen Kennung und der Angaben zu dem Anbieter-Unternehmen auszulesen, sowie dazu, eine Bonusanfrage, die die ausgelesenen Daten enthält, an den Backend-Server (300) zu übermitteln,
• wobei der Backend-Server (300) dazu eingerichtet ist, zu überprüfen, ob die eindeutige Kennung registriert und dem Anbieter-Unternehmen zugeordnet ist, sowie dazu, einem Benutzer Bonuspunkte gutzuschreiben, falls das Überprüfen ergeben hat, dass die eindeutige Kennung registriert und dem Anbieter-Unternehmen zugeordnet ist.
